# EUROPÄISCHE PATENTSCHRIFT

(11) **EP 2 320 399 B1**
(45) Veröffentlichungstag und Bekanntmachung des Hinweises auf die Patenterteilung: **21.03.2012**
(21) Anmeldenummer: 10005005.3
(22) Anmeldetag: 12.05.2010
(51) Int. Cl.: G08B 17/107, G08B 29/04, G08B 29/14, G08B 29/18

(54) **Gefahrenmelder**
Hazard alarm
Dispositif d'alerte de dangers

(30) Priorität: 09.11.2009 DE 202009015335 U
(43) Veröffentlichungstag der Anmeldung: 11.05.2011
(73) Patentinhaber: Job Lizenz GmbH & Co. KG, 22926 Ahrensburg (DE)
(72) Erfinder: Röpke, Gerhard, 23570 Lübeck (DE)
(74) Vertreter: Hauck Patent- und Rechtsanwälte

(56) Entgegenhaltungen:
- EP-A1- 1 783 713
- EP-A1- 1 857 989
- EP-A1- 2 043 068

## Beschreibung

Die Erfindung betrifft einen Gefahrenmelder, insbesondere einen Rauchmelder, umfassend ein an einer Wand oder Decke eines Gebäudes montierbares Gehäuse, und eine in dem Gehäuse vorgesehene Messkammer mit mindestens einer Öffnung zur Umgebung des Gefahrenmelders und einer Messeinrichtung zur Detektion von in die Messkammer eindringendem Gas oder Partikeln, insbesondere Rauchpartikeln.

Gefahrenmelder, die darauf beruhen, den Eintritt von Gas und/oder Rauch in eine Messkammer zu detektieren und bei einer Abweichung von einem Sollzustand ein Warnsignal auszugeben, sind bekannt. Das Warnsignal kann beispielsweise akustisch, optisch oder auf andere Weise abgegeben werden. Solche Gefahrenmelder werden üblicherweise an einer Wand oder Decke in Innenräumen von Gebäuden angebracht. Zur Detektion von durch die Öffnung in die Messkammer eingetretenem Rauch oder Gasen ist in der Messkammer beispielsweise eine optische Messeinrichtung angeordnet. Derartige Gefahrenmelder müssen jederzeit ordnungsgemäß funktionieren und unterliegen daher einer regelmäßigen Wartung. Im Laufe der Betriebszeit kann es zu Verschmutzungen der Raucheintrittsöffnungen oder Ablagerungen von Staub im Inneren der Messkammer kommen. Es ist aber auch denkbar, das der Gefahrenmelder beispielsweise mit einem Klebeband abgeklebt wird, wenn eine Zimmerdecke gestrichen wird, um den Gefahrenmelder vor Farbe zu schützen. Manchmal wird vergessen, das Klebeband wieder zu entfernen. Bedeckt dieses die Eintrittsöffnungen der Messkammer, ist die Funktion des Gefahrenmelders gestört. Eine Beeinträchtigung der Funktion kann auch durch die Installation von beispielsweise Möbelstücken, wie Schränken, oder zusätzlichen Trennwänden in der Nähe des Gefahrenmelders verursacht werden. Solche Gefahrenmelder werden normalerweise in der Mitte eines Raumes an der Raumdecke montiert, um optimale Detektionseigenschaften für Rauch oder Gas zu erreichen. Gerade Gefahrenmelder für Privatwohnungen oder eine wohnungsähnliche Nutzung haben vergleichsweise lange Betriebsdauern von bis zu 10 Jahren. Werden während dieser Zeit zum Beispiel durch Nutzungsänderung der Wohnung zusätzliche Leichtbauwände oder den Raum trennende Möbelstücke in der Nähe des Gefahrenmelders installiert, ist die Detektion von Rauch oder Gas durch diesen möglicherweise nicht mehr ordnungsgemäß gewährleitstet, da Rauch oder Gas nicht mehr frei in die Messkammer gelangen kann.

Aus EP 1857 989 A1 ist ein Rauchmelder mit einer Messkammer und einer Messeinrichtung zur Detektion von in die Messkammer eindringendem Rauch bekannt, der für eine optische/akustische Prüfung von Raucheinlassöffnungen der Messkammer mit mindestens einer Sende- und mindestens einer Empfangseinrichtung ausgestattet ist. Die Sende- und Empfangseinrichtungen können zusätzlich zur Detektienmg von seitlich umliegenden Gegenständen eingesetzt werden.

Aus EP 2 043 068 A1 ist ein Rauchmelder mit einer Messkammer und einer Messeinrichtung zur Detektion von in die Messkammer eindringendem Rauch bekannt, der mit entfernungsempflindlichen Sensoren ausgestattet ist, um Gegenständen in seitlicher Umgebung des Sensors zu detektieren.

Aus EP 1 783 713 A1 ist ein Rauchmelder ohne geschlossene Messkammer bekannt, der mit optischen Sensoren ausgestattet ist, um eine Rauchentwicklung unterhalb des Rauchmelders nach dem Streulichtverfahren zu detektieren.

Aus DE 10 2008 014 991 B3 sind ein Verfahren zur Prüfung des freien Eintritts von Gas in eine Messkammer eines Warnmelders sowie ein entsprechender Warnmelder bekannt. Dabei werden die Raucheintrittsöfmungen der Messkammer überwacht. Mit Hilfe eines Schallgebers im Inneren der Messkammer wird ein kurzer Schallimpuls erzeugt. Nach dieser Anregungsphase wird der Schallgeber als Mikrophon genutzt und die abklingenden Schwingungen des Mikrophons werden gezählt. Auf diese Weise können die Raucheintrittsöffnungen der Messkammer zuverlässig überwacht werden. Ein unerlaubtes Anordnen von beispielsweise Möbelstücken oder Trennwänden in der Nähe des Gefahrenmelders wird jedoch nicht delektiert. In GB 2 341 964 A wird ein Verfahren vorgeschlagen, welches eine unerlaubte Entfernung eines Gefahrenmelders aus seinem Installationssockel mit Hilfe eines Störungsschaltkreises erkennt. Befindet sich der Gefahrenmelder nicht mehr an dem vorgesehenen Installationsort, kann dies angezeigt werden. Eine unzulässige Änderung in der Umgebung des Gefahrenmelders kann auf diese Weise allerdings nicht detektiert werden. In DE 874 422 C wird ein weiteres Verfahren für die Überwachung von Gas- oder Rauchmeldern vorgeschlagen. Durch Entnahme eines von mehreren Gas- oder Rauchmeldern wird ein Ruhestromkreis unterbrochen und in einer Überwachungseinheit wird ein Störungssignal erzeugt. Auf diese Weise soll die unzulässige Entfernung des Gefahrenmelders aus seiner Installationsumgebung detektiert werden. Wiederum ist eine unzulässige Veränderung der Umgebung des Gefahrenmelders nicht erkennbar.

Es ist daher erforderlich, in regelmäßigen Abständen durch Wartungspersonal eine persönliche Überprüfung vor Ort durchzuführen, um sicherzustellen, dass in der Umgebung des Gefahrenmelders keine unzulässige Veränderung erfolgt ist. Der Zugang zu den Gefahrenmeldem gestaltet sich jedoch insbesondere bei Privatwohnungen oftmals schwierig.

Ausgehend von dem erläuternden Stand der Technik liegt der Erfindung die Aufgabe zugrunde, unzulässige Veränderungen in der Umgebung eines an einer Wand oder einer Decke montierten Gefahrenmelders in einfacher und zuverlässiger Weise zu erkennen.

Diese Aufgabe wird erfindungsgemäß durch den Gegenstand von Anspruch 1 gelöst. Vorteilhafte Ausgestaltungen finden sich in den abhängigen Ansprüchen, der Beschreibung und den Figuren.

Für einen Gefahrenmelder der eingangs genannten Art löst die Erfindung die Aufgabe dadurch, dass der Gefahrenmelder mindestens eine Sendeeinrichtung und mindestens eine Empfangseinrichtung aufweist, wobei die Sendeeinrichtung im Betrieb ein Signal in die Umgebung des Gefahrenmelders abgibt, und wobei die Empfangseinrichtung im Betrieb das Signal bei einer Reflexion an Gegenständen in der Umgebung des Gefahrenmelders empfängt und, dass eine Auswerteeinrichtung vorgesehen ist, die das Empfangssignal der Empfangseinrichtung auswertet und bei Feststellen einer Fehlfunktion ein Fehlersignal ausgibt.

Der Gefahrenmelder kann beispielsweise ein Rauchmelder sein. Die in der Messkammer angeordnete Messeinrichtung kann in an sich bekannter Weise eine optische Messeinrichtung, umfassend einen optischen Sender und einen optischen Empfänger, sein. Die optische Messung kann zum Beispiel auf dem Tyndall-Prinzip beruhen, welches an sich bekannt ist. Der erfindungsgemäße Gefahrenmelder weist mindestens eine beispielsweise optische (weitere) Sendeeinrichtung und mindestens eine beispielsweise ebenfalls optische (weitere) Empfangseinrichtung auf. Die Sendeeinrichtung ist derart an dem Gefahrenmelder, beispielsweise an dem Gehäuse oder einem Installationssockel, befestigt, dass sie im Betrieb ein Signal in die Umgebung des Gefahrenmelders abgibt. Die Empfangseinrichtung ist entsprechend ebenfalls derart an dem Gefahrenmelder, beispielsweise an dem Gehäuse oder einem Installationssockel des Gefahrenmelders, angeordnet, dass sie das von der Sendereinrichtung gesendete Signal empfängt nachdem dieses an Gegenständen in der Umgebung des Gefahrenmelders reflektiert wurde. Die Sende- und Empfangseinrichtungen können natürlich auch in dem Gehäuse angeordnet sein und durch geeignete Öffnungen des Gehäuses ein Signal aus diesem heraus senden bzw. ein von außen kommendes Signal empfangen. Bei den Gegenständen kann es sich beispielsweise um Wände des mit dem Gefahrenmelder versehenen Raums oder Möbelstücke handeln. Natürlich können die Sendeeinrichtung und die Empfangseinrichtung auch jeweils durch eine gemeinsame Sende- und Empfangseinrichtung gebildet sein. Die Sendeeinrichtung kann beispielsweise von der Auswerteeinrichtung zyklisch zum Abgeben des Signals in die Umgebung angesteuert werden. Die Empfangseinrichtung kann ebenfalls beispielsweise von der Auswerteeinrichtung zyklisch oder dauerhaft zum Empfang des Signals aktiviert werden. Die beispielsweise an dem Gefahrenmelder selbst, insbesondere auf einer Platine des Gefahrenmelders, vorgesehene Auswerteeinrichtung ist dazu ausgebildet, das von der Empfangseinrichtung empfangene Signal auszuwerten. Stellt die Auswerteeinrichtung dabei eine Fehlfunktion fest, gibt sie ein Fehlersignal aus. Bei einer solchen Fehlfunktion kann es sich insbesondere um ein unzulässiges Vorhandensein von Gegenständen in der Nähe des installierten Gefahrenmelders handeln.

Der erfindungsgemäße Gefahrenmelder erlaubt also eine automatische und selbsttätige Überwachung seiner Umgebung dahingehend, ob in unzulässiger Weise Gegenstände in der Nähe des Gefahrenmelders installiert wurden. Natürlich kann die Überwachung auch von einer an einem anderen Ort als dem Installationsort des Gefahrenmelders angeordneten Brandmeldezentrale ausgelöst werden. Dazu kann von dieser ein entsprechendes Auslösesignal an die Auswerteeinrichtung gesendet werden, die dann wiederum die Sende- und Empfangseinrichtung(en) aktiviert. Eine Anwesenheit von Wartungspersonal am Installationsort des Gefahrenmelders ist dabei nicht erforderlich. Erst wenn die Auswerteeinrichtung ein Fehlersignal ausgibt, kann Wartungspersonal gezielt den als fehlerhaft erkannten, weil beispielsweise in unerlaubter Weise von Gegenständen verdeckten, Gefahrenmelder vor Ort besichtigen und Abhilfe schaffen.

Bei dem von der mindestens einen Sendeeinrichtung ausgesendeten Signal kann es sich beispielsweise um ein Schallsignal handeln. Dieses Schallsignal wird dann entsprechend von der mindestens einen Empfangseinrichtung empfangen. Das von der mindestens einen Sendeeinrichtung ausgesendete Signal kann jedoch auch elektromagnetische Wellen umfassen, die dann wiederum von der mindestens einen Empfangseinrichtung empfangen werden. Bei den elektromagnetischen Wellen kann es sich um Infrarotstrahlung oder Radiowellen handeln. Derartige elektromagnetische Wellen erzeugen eine minimale Störung der Umgebung. Es ist auch beispielsweise sichtbares Licht als Sendesignal denkbar.

Nach einer weiteren Ausgestaltung kann die Auswerteeinrichtung die Laufzeit des Signals zwischen dem Aussenden durch die mindestens eine Sendeeinrichtung und dem Empfang durch die mindestens eine Empfangseinrichtung ermitteln und bei Unterschreiten einer Grenzlaufzeit ein Fehlersignal ausgeben. Die Grenzlaufzeit kann bei bekannter Ausbreitungsgeschwindigkeit des Sendesignals insbesondere einen minimal erlaubten Abstand zu Gegenständen in der Umgebung des Gefahrenmelders angeben. Es kann auch vorgesehen sein, dass die Auswerteeinrichtung dazu ausgebildet ist, aus der ermittelten Laufzeit und der Ausbreitungsgeschwindigkeit des Signals eine Distanz zwischen dem Gefahrenmelder und einem das Signal reflektierenden Gegenstand in der Umgebung des Rauchmelders zu ermitteln. Dieser Distanzwert kann dann gespeichert und/oder ausgegeben werden, zum Beispiel an einer Brandmeldezentrale. Bei Unterschreiten einer Grenzdistanz kann die Auswerteeinrichtung das Fehlersignal ausgeben.

Neben einer Beeinflussung der Laufzeit des Signals kommt es im Zuge einer Reflektion an Gegenständen auch zu einer Abschwächung der Signalintensität. Daher kann nach einer weiteren Ausgestaltung die Auswerteeinrichtung dazu ausgebildet sein, die Intensität des von der mindestens einen Empfangseinrichtung empfangenen Signals zu ermitteln und bei Unterschreiten einer Grenzintensität ein Fehlersignal auszugeben.

Die Auswerteeinrichtung kann über eine Datenübertragungsverbindung, zum Beispiel eine Datenleitung oder eine Funkverbindung, mit einer Störungsstelle oder Brandmeldezentrale verbunden sein. Die Auswerteeinrichtung kann das Fehlersignal dann über die Datenübertragungsverbindung an die Störungsstelle oder Brandmeldezentrale übermitteln. Die Brandmeldezentrale kann sich in dem mit dem Gefahrenmelder versehenen Gebäude oder außerhalb dieses Gebäudes an einem anderen Ort befinden. Durch die Brandmeldezentrale ist eine Femüberwachung einer Vielzahl von Gefahrenmeldern möglich, ohne dass Wartungspersonal vor Ort sein muss. Lediglich zum Start eines Wartungsprozess wäre Wartungspersonal gegebenenfalls erforderlich. Dieses könnte sich beispielsweise in einer Leitstelle oder ähnlichem befinden.

Um die Abdeckung des von dem Gefahrenmelder überwachten Umgebungsbereichs zu verbessern, können mehrere über den Umfang des Gefahrenmelders verteilt angeordnete Sendereinrichtungen und mehrere ebenfalls über den Umfang des Gefahrenmelders verteilt angeordnete Empfangseinrichtungen vorgesehen sein. Besitzt der Gefahrenmelder beispielsweise einen zylindrischen Umfang, können die Sende- und Empfangseinrichtungen in regelmäßigen Winkelabständen angeordnet sein. Beispielsweise können drei Sende- und Empfangseinrichtungen in Abständen von jeweils 120° zueinander angeordnet sein. Auf diese Weise wird eine weitgehend vollständige Abdeckung der Umgebungsüberwachung erreicht. Außerdem kann beispielsweise an einer dem mit dem Gefahrenmelder versehenen Gebäudeinnenraum zugewandten Stirnfläche des Gefahrenmelders bzw. seines Gehäuses, ebenfalls eine oder mehrere Sende- und Empfangseinrichtungen angeordnet sein. Es kann dann ein halbkugelförmiger Raum um den Gefahrenmelder sicher überwacht werden.

Ein Ausführungsbeispiel der Erfindung wird nachfolgend anhand von Figuren näher erläutert. Es zeigen schematisch:
- Fig. 1: einen erfindungsgemäßen Gefahrenmelder in einer Schnittansicht,
- Fig. 2: eine Ansicht des Gefahrenmelders aus Fig. 1 auf seine Stirnseite, und
- Fig. 3: ein Blockdiagramm zur Veranschaulichung der Funktion des erfindungsge- mäßen Gefahrenmelders.

Soweit nichts anderes angegeben ist, bezeichnen in den Figuren gleiche Bezugszeichen gleiche Gegenstände.

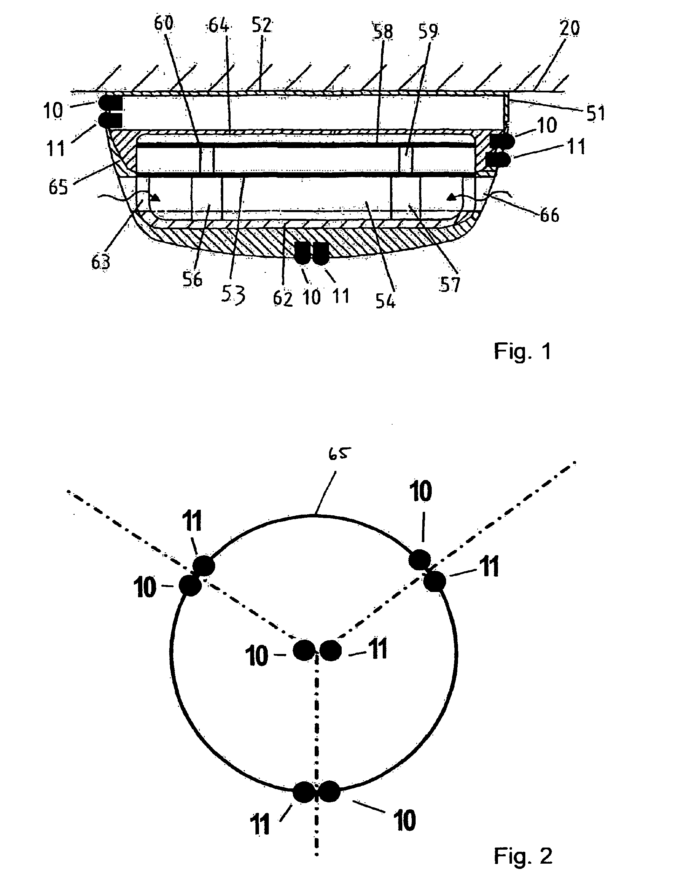

In Figur 1 ist ein erfindungsgemäßer Gefahrenmelder, vorliegend ein Rauchmelder, in einer vertikalen Schnittansicht gezeigt. An einem Sockel 52, der in nicht näher dargestellter Weise an einer Zimmerdecke 20 befestigt ist, ist ein Gehäuse 65 aus Kunststoff bei dem Bezugszeichen 51 angesetzt. In dem Gehäuse 65 ist eine Messkammer 54 ausgebildet. Das Gehäuse 65 wird von einem Flanschteil 64 gehalten, das mit dem Sockel 52 verbunden ist. Dieser Aufbau ist an sich bekannt und wird daher nicht näher erläutert. Innerhalb des Flanschteils 64 ist eine Platine 58 vorgesehen. Ein Wandabschnitt 53 trägt eine in der Messkammer 54 angeordnete Messeinrichtung, umfassend einen optischen Sender 56 und einen optischen Empfänger 57, die nach dem Tyndall-Prinzip arbeiten, wie dies für optische Rauchmelder allgemein bekannt ist. Über elektrische Kontakte 59, 60 ist die Platine 58 mit dem Sender 56 und dem Empfänger 57 verbunden. Die optische Messeinrichtung stützt sich auf einer Platte 62 ab, die auf dem Boden der Messkammer 54 angeordnet ist. Zur Messkammer 54 sind seitliche Eintrittsöffnungen 63, 66 für Gas bzw. Rauch zu erkennen. Das Gas bzw. die Luft treten dabei entlang der in Figur 1 schematisch dargestellten Pfeile durch die Öffnungen 63, 66 in die Messkammer 54 ein. Sobald Aerosole im Gas oder andere Teilchen den Empfang von Licht vom optischen Sender 56 verändern, wird ein Alarmsignal erzeugt, wie dies an sich bekannt ist. Die hierzu erforderliche elektronische Schaltung ist nicht näher dargestellt.

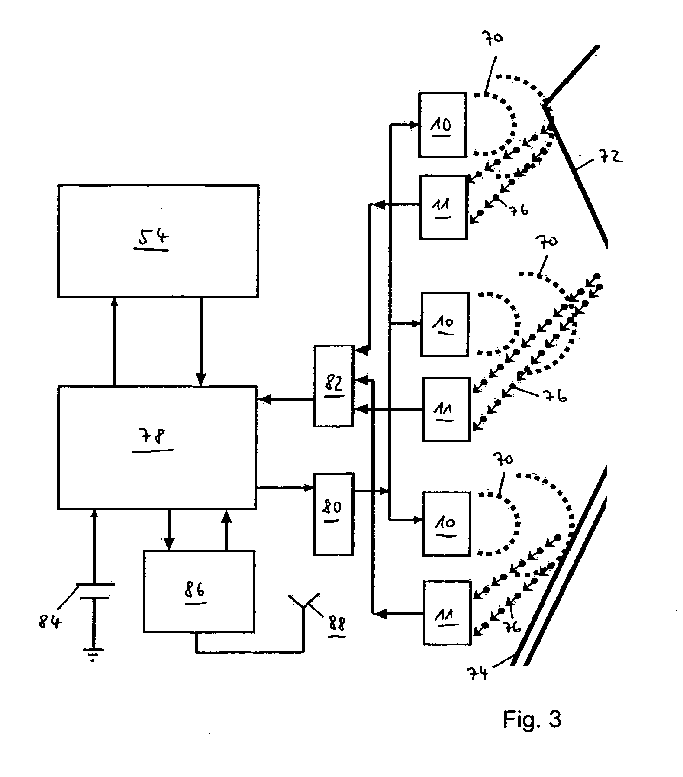

Für eine Überwachung der Umgebung des Gefahrenmelders auf sich in der Nähe befindliche Gegenstände, beispielsweise Möbel oder Wände, sind in dem gezeigten Beispiel im Außenbereich des Gefahrenmelders Sendeeinrichtungen 10 und Empfangseinrichtungen 11 angeordnet. Die Sende- und Empfangseinrichtungen 10, 11 können, wie dies in Figur 1 beispielhaft dargestellt ist, zum Beispiel an dem Gehäuse 65 und/oder dem Installationssockel 52 des Gefahrenmelders angeordnet sein. In Figur 2 ist eine Draufsicht auf die in Figur 1 untere Stirnfläche des Gefahrenmelders dargestellt. Dabei sind drei Gruppen von Sende- und Empfangseinrichtungen 10, 11 zu erkennen, die paarweise in einem Winkelabstand von 120° über den Umfang des Gefahrenmelders verteilt sind. Darüber hinaus ist zu erkennen, dass etwa zentral auf der unteren Stirnfläche des Gefahrenmelders ebenfalls eine Sendeeinrichtung 10 und eine Empfangseinrichtung 11 angeordnet sind. Zum Überwachen der Umgebung des Gefahrenmelders werden von einer beispielsweise auf der Platine 58 angeordneten Auswerteeinrichtung die Sendeeinrichtungen 10 zum Aussenden eines Signals in die Umgebung des Gefahrenmelders angesteuert. Das Signal kann zum Beispiel ein Schallsignal oder eine elektromagnetische Welle sein, zum Beispiel eine Funkwelle oder Infrarotstrahlung. Sofern das ausgesendete Signal von in der Nähe des Gefahrenmelders befindlichen Gegenständen reflektiert wird, wird es von den Empfangseinrichtungen 11 wieder empfangen. Das Empfangssignal der Empfangseinrichtungen 11 kann von der Auswerteeinrichtung ausgewertet werden. Dies soll anhand des Blockschaltbilds in Figur 3 näher erläutert werden.

In Figur 3 sind drei Sendeeinrichtungen 10 und drei Empfangseinrichtungen 11 dargestellt. Bei dem Bezugszeichen 70 sind die von den Sendeeinrichtungen 10 ausgesandten Signale veranschaulicht. Die Messkammer ist bei dem Bezugszeichen 54 veranschaulicht. An schematisch bei den Bezugszeichen 72, 74 gezeigten Gegenständen in der Umgebung des Gefahrenmelders wird das von den Sendeeinrichtungen 10 gesendete Signal reflektiert und gelangt zu den Empfangseinrichtungen 11, wie in Figur 3 bei dem Bezugszeichen 76 veranschaulicht. Die Ansteuerung der Sendeeinrichtungen 10 zum Aussenden der Signale 70 erfolgt in dem gezeigten Beispiel durch die Auswerteeinrichtung 78. Die Ansteuerung der Sendeeinrichtungen 10 erfolgt über einen Sendeverstärker 80. Das von den Empfangseinrichtungen 11 empfangene Signal wird wiederum durch einen Empfangsverstärker 82 verstärkt der Auswerteeinrichtung 78 zugeführt. Die Auswerteeinrichtung 78 und auch die Verstärker 80, 82 sowie weitere elektronische Komponenten der Anordnung werden von einer beispielsweise an dem Gehäuse 65 des Gefahrenmelders angeordneten Batterie 84 mit elektrischer Energie versorgt. Die Ansteuerung der Sendeeinrichtungen 10 zum Ausgeben des Signals durch die Auswerteeinrichtung 78 kann selbsttätig in regelmäßigen zeitlichen Abständen erfolgen. Die Auswerteeinrichtung 78 kann beispielsweise aus den von den Empfangseinrichtungen 11 empfangenen Signalen eine Laufzeit zwischen Aussenden des Signals durch die Sendeeinrichtungen 10 und Empfang des Signals durch die Empfangseinrichtungen 11 und daraus gegebenenfalls anhand der Ausbreitungsgeschwindigkeit des Signals eine Distanz zu einem in der Nähe des Gefahrenmelders befindlichen Gegenstand berechnen. Die Laufzeit und/oder die Distanz können mit einem Grenzwert verglichen werden. Unterschreitet die gemessene Laufzeit bzw. Distanz diesen Grenzwert, gibt die Auswerteeinrichtung 78 ein Fehlersignal an eine Funkeinrichtung 86, die über eine Antenne 88 das Fehlersignal und/oder die gemessene Laufzeit bzw. Distanz per Funk an eine von dem Gefahrenmelder entfernte und in den Figuren nicht dargestellte Brandmeldezentrale sendet. Alternativ zu einem selbsttätigen zyklischen Auslösen der Sendeeinrichtungen 10 durch die Auswerteeinrichtung 78 ist auch ein Auslösen von der Brandmeldezentrale aus denkbar, indem ein entsprechender Auslösebefehl von der Brandmeldezentrale per Funk an die Antenne 88 und die Funkeinrichtung 86 gesendet und an die Auswerteeinrichtung 78 gegeben wird. Diese kann dann ferngesteuert die Sendeeinrichtungen 10 auslösen.

Selbstverständlich ist es auch denkbar, die an dem Gefahrenmelder angeordneten Sende- und Empfangseinrichtungen 10, 11 paarweise nacheinander durch die Auswerteeinrichtung 78 auszulösen und so eine räumliche Auflösung der Umgebung des Gefahrenmelders zu ermitteln. Insbesondere kann auf diese Weise festgestellt werden, wo sich in unerlaubter Weise Gegenstände in der Nähe des Gefahrenmelders befinden.

## Patentansprüche

1. Gefahrenmelder, insbesondere Rauchmelder, umfassend ein an einer Wand oder Decke (20) eines Gebäudes montierbares Gehäuse (65), und eine in dem Gehäuse (65) vorgesehene Messkammer (54) mit mindestens einer Öffnung (63, 66) zur Umgebung des Gefahrenmelders und einer Messeinrichtung (56, 57) zur Detektion von in die Messkammer (54) eindringendem Gas oder Partikeln, insbesondere Rauchpartikeln,
**dadurch gekennzeichnet, dass** der Gefahrenmelder mindestens eine Sendeeinrichtung (10) und mindestens eine Empfangseinrichtung (11) aufweist, wobei die Sendeeinrichtung (10) im Betrieb ein Signal in die Umgebung des Gefahrenmelders abgibt, und wobei die Empfangseinrichtung (11) im Betrieb das Signal bei einer Reflexion an Gegenständen (72, 74) in der Umgebung des Gefahrenmelders empfängt und, dass eine Auswerteeinrichtung (78) vorgesehen ist, die das Empfangssignal der Empfangseinrichtung (11) auswertet und bei Feststellen einer Fehlfunktion ein Fehlersignal ausgibt, wobei mindestens eine Sendecinrichtung (10) und mindestens eine Empfangseinrichtung (11) an einer dem mit dem Gefahrenmelder verschenen Gebäudeinnenraum zugewandten Stirnfläche des Gefahrenmelders angeordnet sind.

2. Gefahrenmelder nach Anspruch 1, **dadurch gekennzeichnet, dass** das von der mindestens einen Sendeeinrichtung (10) ausgesendete Signal ein Schallsignal ist.

3. Gefahrenmelder nach Anspruch 1, **dadurch gekennzeichnet, dass** das von der mindestens einen Sendeeinrichtung (10) ausgesendete Signal elektromagnetische Wellen umfasst.

4. Gefahrenmelder nach Anspruch 3, **dadurch gekennzeichnet, dass** die elektromagnetischen Wellen Infrarotstrahlung oder Radiowellen umfassen.

5. Gefahrenmelder nach einem der vorhergehenden Ansprüche, **dadurch gekennzeichnet, dass** die Auswerteeinrichtung (78) die Laufzeit des Signals zwischen dem Aussenden durch die mindestens eine Sendeeinrichtung (10) und dem Empfang durch die mindestens eine Empfangseinrichtung (11) ermittelt und bei Unterschreiten einer Grenzlaufzeit ein Fehlersignal ausgibt.

6. Gefahrenmelder nach einem der vorhergehenden Ansprüche, **dadurch gekennzeichnet, dass** die Auswerteeinrichtung (78) die Laufzeit des Signals zwischen dem Aussenden durch die mindestens eine Sendeeinrichtung (10) und dem Empfang durch die mindestens eine Empfangseinrichtung (11) ermittelt und aus der ermittelten Laufzeit und der Ausbreitungsgeschwindigkeit des Signals eine Distanz zwischen dem Gefahrenmelder und einem das Signal reflektierenden Gegenstand in der Umgebung des Rauchmelders ermittelt.

7. Gefahrenmelder nach Anspruch 6, **dadurch gekennzeichnet, dass** die Auswerteeinrichtung (78) bei Unterschreiten einer Grenzdistanz ein Fehlersignal ausgibt.

8. Gefahrenmelder nach einem der vorhergehenden Ansprüche, **dadurch gekennzeichnet, dass** die Auswerteeinrichtung (78) die Intensität des von der mindestens einen Empfangseinrichtung (11) empfangenen Signals ermittelt und bei Unterschreiten einer Grenzintensität ein Fehlersignal ausgibt.

9. Gefahrenmelder nach einem der vorhergehenden Ansprüche, **dadurch gekennzeichnet, dass** die Auswerteeinrichtung (78) über eine Datenübertragungsverbindung (86, 88) mit einer Störungsstelle oder Brandmeldezentrale verbunden ist und das Fehlersignal an die Störungsstelle oder Brandmeldezentrale übermittelt.

10. Gefahrenmelder nach einem der vorhergehenden Ansprüche, **dadurch gekennzeichnet, dass** mehrere über den Umfang des Gefahrenmelders verteilt angeordnete Sendeeinrichtungen (10) und mehrere ebenfalls über den Umfang des Gefahrenmelders verteilt angeordnete Empfangseinrichtungen (11) vorgesehen sind.

## Claims

1. Hazard alarm, in particular smoke alarm, comprising a housing (65) mountable on a wall or ceiling (20) of a building and a measurement chamber (54) provided in the housing (65) with at least one opening (63, 66) to the environment of the hazard alarm and a measuring device (56, 57) for detecting gas or particles penetrating into the measurement chamber (54), in particular smoke particles,
**characterized in that** the hazard alarm has at least one transmitting device (10) and at least one receiving device (11), wherein the transmitting device (10) gives off a signal into the environment of the hazard alarm during operation, and wherein the receiving device (11) receives the signal during reflection on objects (72, 74) in the environment of the hazard alarm during operation and **in that** an evaluation device (78) is provided, which evaluates the received signal of the receiving device (11) and outputs a fault signal when a fault is determined, wherein at least one transmitting device (10) and at least one receiving device (11) are arranged on a front surface of the hazard alarm facing the interior of the building provided with the hazard alarm.

2. The hazard alarm according to claim 1, **characterized in that** the signal output by the at least one transmitting device (10) is an acoustic signal.

3. The hazard alarm according to claim 1, **characterized in that** the signal output by the at least one transmitting device (10) comprises electromagnetic waves.

4. The hazard alarm according to claim 3, **characterized in that** the electromagnetic waves comprise infrared radiation or radio waves.

5. The hazard alarm according to one of the previous claims, **characterized in that** the evaluation device (78) determines the runtime of the signal by the at least one transmitting device (10) and the receipt by the at least one receiving device (11) and outputs a fault signal if a threshold runtime is fallen short of.

6. The hazard alarm according to one of the previous claims, **characterized in that** the evaluation device (78) determines the runtime of the signal between the transmission by the at least one transmitting device (10) and the receipt by the at least one receiving device (11) and determines from the determined runtime and the expansion speed of the signal a distance between the hazard alarm and an object reflecting the signal in the environment of the smoke alarm.

7. The hazard alarm according to claim 6, **characterized in that** the evaluation device (78) outputs a fault signal when a threshold distance is fallen short of.

8. The hazard alarm according to one of the previous claims, **characterized in that** the evaluation device (78) outputs the intensity of the signal received by the at least one receiving device (11) and outputs a fault signal when a threshold intensity is fallen short of.

9. The hazard alarm according to one of the previous claims, **characterized in that** the evaluation device (78) is connected with a fault reporting center or fire alarm receiving center via a data transfer connection (86, 88) and the fault signal is transferred to the fault reporting center or the fire alarm receiving center.

10. The hazard alarm according to one of the previous claims, **characterized in that** several transmitting devices (10) arranged distributed over the perimeter of the hazard alarm and several receiving devices (11) also arranged distributed over the perimeter of the hazard alarm are provided.

## Revendications

1. Dispositif d'alerte de dangers, en particulier dispositif d'alerte de fumée, comprenant un boîtier (65) pouvant être monté sur une paroi ou un plafond (20) d'un bâtiment, et une chambre de mesure (54) prévue dans le boîtier (65) avec au moins une ouverture (63, 66) vers l'environnement du dispositif d'alerte de dangers et un équipement de mesure (56, 57) pour la détection de gaz ou de particules entrant dans la chambre de mesure (54), en particulier de particules de fumée,
**caractérisé en ce que** le dispositif d'alerte de dangers présente au moins un équipement d'émission (10) et au moins un équipement de réception (11), l'équipement d'émission (10) délivrant en fonctionnement un signal dans l'environnement du dispositif d'alerte de dangers, et l'équipement de réception (11) recevant en fonctionnement le signal lors d'une réflexion sur des objets (72, 74) dans l'environnement du dispositif d'alerte de danger, et **en ce qu'**il est prévu un équipement d'analyse (78) qui analyse le signal de réception de l'équipement de réception (11) et, en cas de constatation d'un dysfonctionnement, délivre un signal de défaut, au moins un équipement d'émission (10) et au moins un équipement de réception (11) étant disposés sur une surface frontale du dispositif d'alerte de dangers tournée vers l'espace intérieur de bâtiment équipé du dispositif d'alerte de dangers.

2. Dispositif d'alerte de dangers selon la revendication 1, **caractérisé en ce que** le signal émis par l'équipement d'émission (10) au moins au nombre de un est un signal sonore.

3. Dispositif d'alerte de dangers selon la revendication 1, **caractérisé en ce que** le signal émis par l'équipement d'émission (10) au moins au nombre de un comprend des ondes électromagnétiques.

4. Dispositif d'alerte de dangers selon la revendication 3, **caractérisé en ce que** les ondes électromagnétiques comprennent un rayonnement infrarouge ou des ondes radio.

5. Dispositif d'alerte de dangers selon une des revendications précédentes, **caractérisé en ce que** l'équipement d'analyse (78) détermine le temps de parcours du signal entre l'émission par l'équipement d'émission (10) au moins au nombre de un et la réception par l'équipement de réception (11) au moins au nombre de un, et délivre un signal de défaut en cas de passage sous un temps de parcours limite.

6. Dispositif d'alerte de dangers selon une des revendications précédentes, **caractérisé en ce que** l'équipement d'analyse (78) détermine le temps de parcours du signal entre l'émission par l'équipement d'émission (10) au moins au nombre de un et la réception par l'équipement de réception (11) au moins au nombre de un et, à partir du temps de parcours déterminé et de la vitesse de propagation du signal, détermine une distance entre le dispositif d'alerte de dangers et un objet réfléchissant le signal et situé dans l'environnement du dispositif d'alerte de fumée.

7. Dispositif d'alerte de dangers selon la revendication 6, **caractérisé en ce que** l'équipement d'analyse (78) délivre un signal de défaut en cas de passage sous une distance limite.

8. Dispositif d'alerte de dangers selon une des revendications précédentes, **caractérisé en ce que** l'équipement d'analyse (78) détermine l'intensité du signal reçu par l'équipement de réception (11) au moins au nombre de un et délivre un signal de défaut en cas de passage sous une intensité limite.

9. Dispositif d'alerte de dangers selon une des revendications précédentes, **caractérisé en ce que** l'équipement d'analyse (78) est raccordé à un service des dérangements ou à une centrale d'alarme incendie par le biais d'une liaison de transmission de données (86, 88), et transmet le signal de défaut au service des dérangements ou à la centrale d'alarme incendie.

10. Dispositif d'alerte de dangers selon une des revendications précédentes, **caractérisé en ce que** plusieurs équipements d'émission (10) disposés de façon répartie sur la circonférence du dispositif d'alerte de dangers et plusieurs équipements de réception (11) également disposés de façon répartie sur la circonférence du dispositif d'alerte de dangers sont prévus.
